# EUROPÄISCHE PATENTSCHRIFT

(11) **EP 2 737 612 B1**
(45) Veröffentlichungstag und Bekanntmachung des Hinweises auf die Patenterteilung: **16.09.2015**
(21) Anmeldenummer: 12729982.4
(22) Anmeldetag: 27.06.2012
(51) Int. Cl.: H02K 7/116, B60K 7/00, B60K 17/04

(54) **RADNAHE ANTRIEBSEINHEIT FÜR EIN KRAFTFAHRZEUG**
DRIVE UNIT MOUNTED CLOSE TO THE WHEEL FOR A MOTOR VEHICLE
ENSEMBLE D'ENTRAÎNEMENT ADJACENT À UNE ROUE POUR VÉHICULE À MOTEUR

(30) Priorität: 28.07.2011 DE 102011080036
(43) Veröffentlichungstag der Anmeldung: 04.06.2014
(73) Patentinhaber: ZF Friedrichshafen AG, 88038 Friedrichshafen (DE)
(72) Erfinder: MAIR, Ulrich, 88046 Friedrichshafen (DE); POLLMEYER, Stephan, 88046 Friedrichshafen (DE); MÜNSTER, Martin, 82140 Olching (DE)
(86) Internationale Anmeldenummer: PCT/EP2012/062406
(87) Internationale Veröffentlichungsnummer: WO 2013/013923

(56) Entgegenhaltungen:
- WO-A1-2007/022865
- WO-A1-2011/003489
- DE-A1- 4 108 647
- DE-A1- 4 134 840
- DE-A1- 10 338 659
- US-A1- 2009 101 424

## Beschreibung

Die Erfindung betrifft eine radnahe Antriebseinheit für ein Kraftfahrzeug, insbesondere ein Elektrofahrzeug, umfassend eine elektrische Maschine mit einer Antriebswelle und eine Getriebeeinheit mit zumindest einer ersten Getriebekomponente mit einer Abtriebswelle, wobei die Getriebeeinheit mit der Antriebswelle zum Übertragen von Drehmomenten zusammenwirkt.

Eine Antriebseinheit nach dem Oberbegriff des Anspruchs 1 ist aus der DE 4 108 647 bekannt.

Die Erfindung betrifft ebenfalls eine Fahrzeugachse mit zumindest einer radnahen Antriebseinheit sowie die Verwendung einer radnahen Antriebseinheit.

Im Unterschied zu Radnabenmotoren, die direkt in ein Rad eines Fahrzeugs eingebaut werden und im Unterschied zu Zentralantrieben, bei denen mehrere Räder über eine zentral angeordnete Antriebseinheit und ein entsprechendes Getriebe angetrieben werden, sind radnahe Antriebseinheiten insbesondere für Elektrofahrzeuge bekannt geworden. Radnahe Antriebseinheiten werden dabei üblicherweise an den jeweiligen Enden eines Querprofils einer Vorder- oder Hinterachse des Elektrofahrzeugs zum Antrieb des jeweiligen Rades angeordnet.

Eine einzelne radnahe Antriebseinheit ist dabei mit einer elektrischen Maschine, die eine Antriebswelle aufweist, versehen und mit einer Getriebeeinheit, die zumindest eine Getriebekomponente mit einer Abtriebswelle aufweist. Die Antriebswelle ist dabei mit der Getriebeeinheit verbunden, wobei die Getriebeeinheit dazu dient, die Drehzahl des Motors in eine gewünschte Drehzahl des Rades des Kraftfahrzeugs zu übersetzen. Mittels der elektrischen Maschine wird somit das jeweilige Rad des Elektrofahrzeugs angetrieben.

Um die Antriebswelle der elektrischen Maschine und die Abtriebswelle der Getriebeeinheit zu lagern, ist es bekannt geworden, Axiallager und Radiallager vorzusehen. Dies ermöglicht eine kompakte Lagerung der Antriebs- und Abtriebswelle.

Nachteilig jedoch dabei ist, dass die Antriebs- und Abtriebswelle kippen können und dies in den jeweiligen Lagern zu einem sogenannten Kantentragen führt, was die Lebensdauer der Lager reduziert. Die Ausbildung der Axial- und Radiallager als Nadellager führt ebenfalls zu einer erhöhten Reibung aufgrund von sogenanntem Bohren der entsprechenden Wälzkörper des Nadellagers, was höhere Reibungsverluste in der radnahen Antriebseinheit bedingt.

Eine Aufgabe der vorliegenden Erfindung ist es daher, eine einfache und hinreichend steife Lagerung von Wellen in einer radnahen Antriebseinheit zur Verfügung zu stellen, ohne dass der Bauraum wesentlich vergrößert oder die Kosten für die Herstellung wesentlich ansteigen.

Unter den Begriff Radiallager fallen insbesondere Zylinderrollen-, Rillenkugel-, Schrägkugel- und Kegelrollenlager.

Die Erfindung löst die Aufgabe bei einer radnahen Antriebseinheit gemäß Anspruch 1.

Unter einem Elektrofahrzeug wird auch ein Fahrzeug verstanden, das neben einem oder mehreren elektrischen Antriebsmotoren noch Antriebsmotoren anderer Bauart, wie z.B. Verbrennungsmotoren umfasst.

Die Erfindung löst die Aufgabe ebenfalls mit einer Fahrzeugachse mit zumindest einer radnahen Antriebseinheit gemäß zumindest einem der Ansprüche 2-11.

Die Erfindung löst die Aufgabe ebenfalls mit einer Verwendung einer radnahen Antriebseinheit gemäß zumindest einem der Ansprüche 1-11.

Durch die Fest-Los-Lagerung von Antriebswelle und Abtriebswelle und der Ausbildung der Antriebswellenlager und Abtriebswellenlager als Radiallager wird die Steifigkeit der Lagerung von Antriebswelle und Abtriebswelle wesentlich erhöht. Gleichzeitig wird die Akustik der Getriebeeinheit und damit der radnahen Antriebseinheit verbessert, da nun beispielsweise Zahnräder in der Getriebeeinheit durch die steifere Lagerung zuverlässiger an- und aufeinander abrollen können. Ebenso werden durch die verbesserte Lagerung Wellen- und Getriebekomponenten der Getriebeeinheit unempfindlicher gegen Verkippung, was die Lebensdauer der Getriebeeinheit insgesamt erhöht. Schließlich wird auch der Wirkungsgrad optimiert, da weniger Reibungsverluste in der radnahen Antriebseinheit auftreten.

Weitere vorteilhafte Ausführungsformen, Vorteile und Merkmale der Erfindung sind in den Unteransprüchen beschrieben.

Zweckmäßigerweise sind die Antriebswellenlager und/oder die Abtriebswellenlager als Wälzlager ausgebildet, wobei zumindest eines der Loslager als Nadellager, das zumindest eine andere Loslager oder Festlager als Rillenkugellager oder Schrägkugellager ausgebildet ist. Auf diese Weise können verschiedene Arten von Lagern miteinander kombiniert werden, was insgesamt die Steifigkeit der Antriebswelle und Abtriebswelle und damit auch von Getriebekomponenten in der Getriebeeinheit weiter erhöht.

Vorteilhafterweise ist an der Abtriebswelle eine zweite Getriebekomponente, insbesondere ein Ritzel angeordnet, wobei das zumindest eine Abtriebswellenlager zwischen erster und zweiter Getriebekomponente angeordnet ist. Auf diese Weise kann der Wirkungsgrad und die Lebensdauer der Getriebeeinheit und damit auch der radnahen Antriebseinheit noch verbessert bzw. erhöht werden. Wird zudem ein mit dem Ritzel zusammenwirkendes Stirnrad einer Stirnrad-Ritzelanordnung noch mit einer möglichst steifen Lagerung versehen, kann der Wirkungsgrad der Getriebeeinheit noch weiter erhöht werden. Hierzu wird das Ritzel auf der Abtriebswelle im Wesentlichen im Endbereich der Abtriebswelle mit einer Loslagerung versehen, die vorzugsweise als Radialnadellager ausgeführt wird. Die Festlagerung der Abtriebswelle wird vorzugsweise durch ein Radialrillenkugellager bereitgestellt.

Zweckmäßigerweise sind zwei Abtriebswellenlager angeordnet und eines der Abtriebswellenlager ist auf der der elektrischen Maschine zugewandten Seite der ersten Getriebekomponente angeordnet. Auf diese Weise wird die Abtriebswelle noch zuverlässiger gegen ein Verkippen gesichert. Daneben ist damit auch im Bereich der Antriebswelle eine zuverlässige Lagerung der Abtriebswelle möglich.

Vorteilhafterweise ist die erste Getriebekomponente als Planetengetriebe ausgebildet und die zweite Getriebekomponente als Ritzel ausgebildet und an der Abtriebswelle des Planetengetriebes angeordnet. Das Planetengetriebe und ein damit verbundenes Ritzel ermöglichen auf äußerst kostengünstige und zuverlässige Weise eine Übersetzung der Kraft der elektrischen Maschine auf ein mit dem Ritzel beispielsweise zusammenwirkendes Stirnrad, welches wiederum ein Rad des Elektrofahrzeugs über eine Radwelle antreiben kann.

Zweckmäßigerweise sind Abtriebswelle und Ritzel einstückig hergestellt. Damit kann eine Ritzellaufverzahnung für das Ritzel direkt in die Abtriebswelle eingearbeitet werden kann und so der Herstellungsprozess vereinfacht wird.

Vorteilhafterweise sind Abtriebswelle und Ritzel über eine Mitnahmeverzahnung zur Übertragung von Drehmomenten verbunden. Auf diese Weise können Ritzel und Steg bzw. Abtriebswelle zunächst getrennt voneinander hergestellt werden und dann auf einfache Weise zur Kraftübertragung ineinander eingesteckt werden. Ein aufwändiges und teures Festlegen von Ritzel und Abtriebswelle, beispielsweise mittels Verschweißen, etc. wird damit vermieden.

Vorteilhafterweise ist bei einer radnahen Antriebseinheit gemäß zumindest einem der Ansprüche 1-11 ein Antriebswellenlager auf der Innenseite der Abtriebswelle angeordnet. Durch die kombinierte Lagerung von äußeren und inneren Radiallagern kann der Bauraum für eine radnahe Antriebseinheit noch weiter reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder auf ähnliche oder funktional gleiche Bauteile oder Elemente beziehen.

Dabei zeigen jeweils in schematischer Form
- Figur 1: eine aufgeschnittene Darstellung einer radnahen Antriebseinheit gemäß einer ersten Ausführungsform der vorliegenden Erfindung;
- Figur 2: eine aufgeschnittene Darstellung einer radnahen Antriebseinheit nicht gemäß der vorliegenden Erfindung;
- Figur 3a-3f: verschiedene Positionen von Antriebswellenlagern und Abtriebswellenlagern in weiteren Ausführungsformen von radnahen Antriebseinheiten mit Lagerung über Rillenkugel- und Nadellager,
- Figur 4: einen Querschnitt durch eine bekannte radnahe Antriebseinheit;
- Figur 5a - 5f: verschiedene Positionen von Antriebswellenlagern und Abtriebswellenlagern in weiteren Ausführungsformen von radnahen Antriebseinheiten mit Lagerung über Schrägkugel- und Nadellager;
- Figur 6a *-* 6c: verschiedene Positionen Von Antriebswellenlagern und Abtriebswellenlagern in weiteren Ausführungsformen der radnahen Antriebseinheit mit angestellter Lagerung über Schrägkugellager;
- Figur 7a-c: verschiedene Positionen von Antriebswellenlagern und Abtriebswellenlagern in weiteren Ausführungsformen der radnahen Antriebseinheit mit fliegender Lagerung;
- Figur 8a-c: verschiedene Positionen von Antriebswellenlagern und Abtriebswellenlagern in weiteren Ausführungsformen der radnahen Antriebseinheit mit Innen- und Außenlagerung;
- Figur 9a-i: verschiedene Positionen von Antriebswellenlagern und Abtriebswellenlagern in radnahen Antriebseinheiten mit Nadellagern; sowie
- Figur 10: eine weitere Ausführungsform der radnahen Antriebseinheit gemäß der vorliegenden Erfindung.

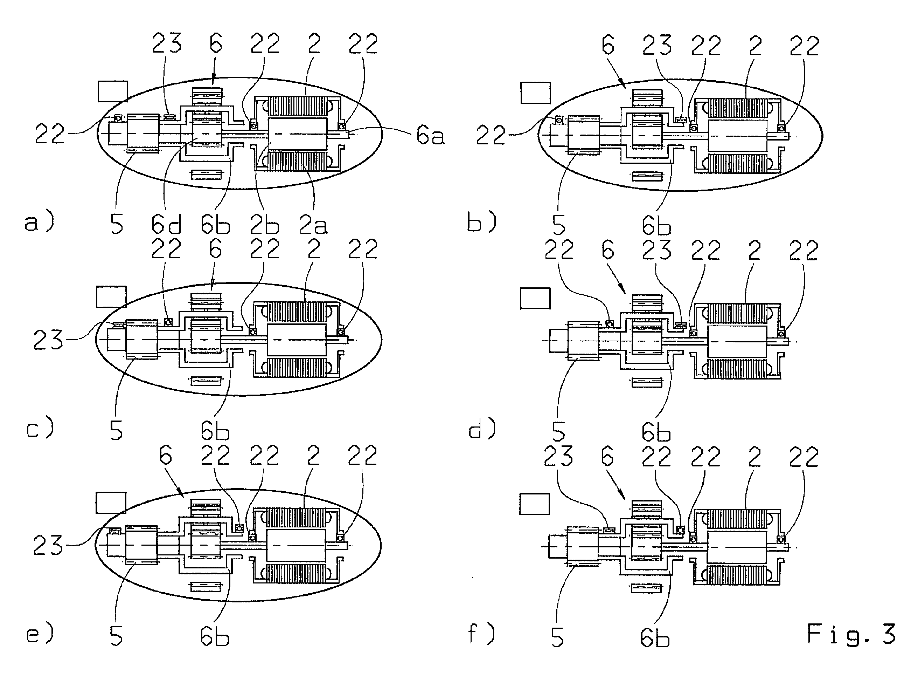

Von den Figuren 3a-3f, 5a-5f, 6a-6c, 7a-7c, 8a-8c, 9a-9i nur Figur 3a, 3c, 5a, 5c, 6a, 7a 7b, 7c, 8a, 8b zeigen eine Abtriebswelle, die gemäß Erfindung fliegend gelagert ist.

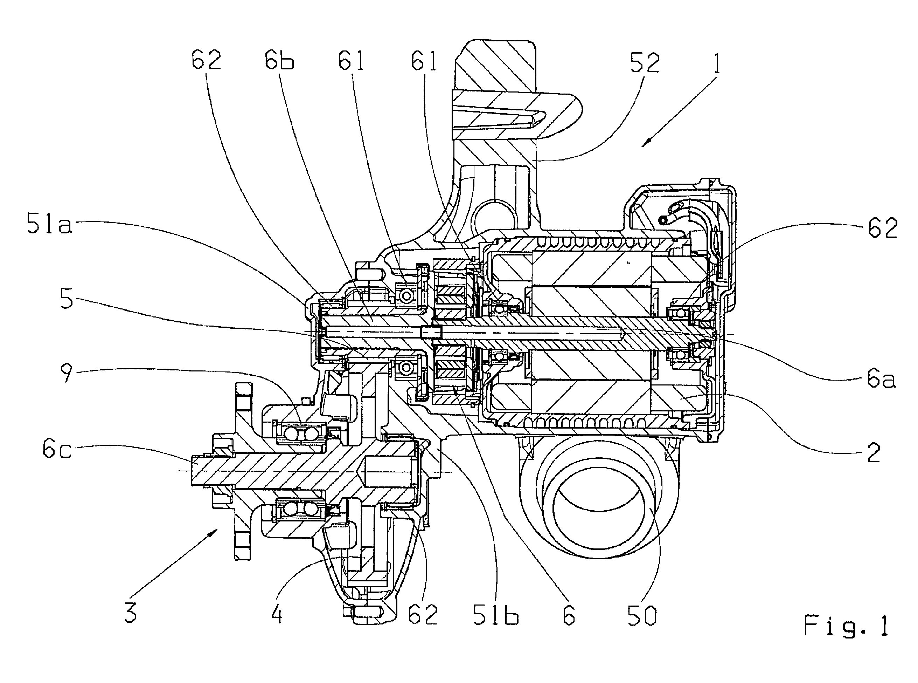

Figur 1 zeigt eine aufgeschnittene Darstellung einer radnahen Antriebseinheit gemäß einer ersten Ausführungsform der vorliegenden Erfindung.

In Figur 1 bezeichnet Bezugszeichen 1 eine radnahe Antriebseinheit. Die radnahe Antriebseinheit 1 umfasst einen Elektromotor 2 und eine Getriebeeinheit 3, die miteinander zum Antrieb eines Rades verbunden sind. Der Elektromotor 2 weist eine Antriebswelle ausgebildet als Sonnenwelle 6a auf, die mit einem Planetengetriebe 6 zusammenwirkt. Das Planetengetriebe 6 weist eine Abtriebswelle in Form einer Stegwelle 6b auf. An der Stegwelle 6b ist ein Ritzel 5 angeordnet, welches mit einem Stirnrad 4 in Eingriff steht. An dem Stirnrad 4 ist eine Radwelle 6c angeordnet, die eines der Räder des Elektrofahrzeugs antreibt und die über ein Radlager 9 gelagert ist.

An der Außenseite des Elektromotors 2 ist ein Federteller 50 angeordnet, welcher zur Aufnahme einer Feder dient. Die Feder stützt sich dann an einer Karosserie des Elektrofahrzeugs ab. Insgesamt ist die radnahe Antriebseinheit 1 an einem Längslenker 52 einer Verbundlenkerachse (nicht gezeigt) angeordnet.

Die Sonnenwelle 6a und die Stegwelle 6b der Getriebeeinheit 1 sind in Figur 1 wie folgt gelagert: Die Sonnenwelle 6a ist auf der der Getriebeeinheit 1 abgewandten Seite des Elektromotors 2 mittels eines Loslagers 62, im Bereich zwischen dem Planetengetriebe 6 und dem Elektromotor 2 mittels eines Festlagers 61 gelagert. Die Stegwelle 6b ist zwischen Planetengetriebe 6 und Ritzel 5 mittels eines Festlagers 61 gelagert. Die Festlagerung erfolgt vorzugsweise durch ein Radialrillenkugellager und ist im Längslenkergehäuse 51 b angeordnet. Auf der dem Planetengetriebe 6 abgewandten Seite des Ritzels 5 ist die Stegwelle 6b mit einer Loslagerung (Loslager 62) versehen, die vorzugsweise als Radialnadellager ausgeführt ist. Diese ist vorzugsweise in einem radseitigen Gehäuse 51a der radnahen Antriebseinheit 1 angeordnet.

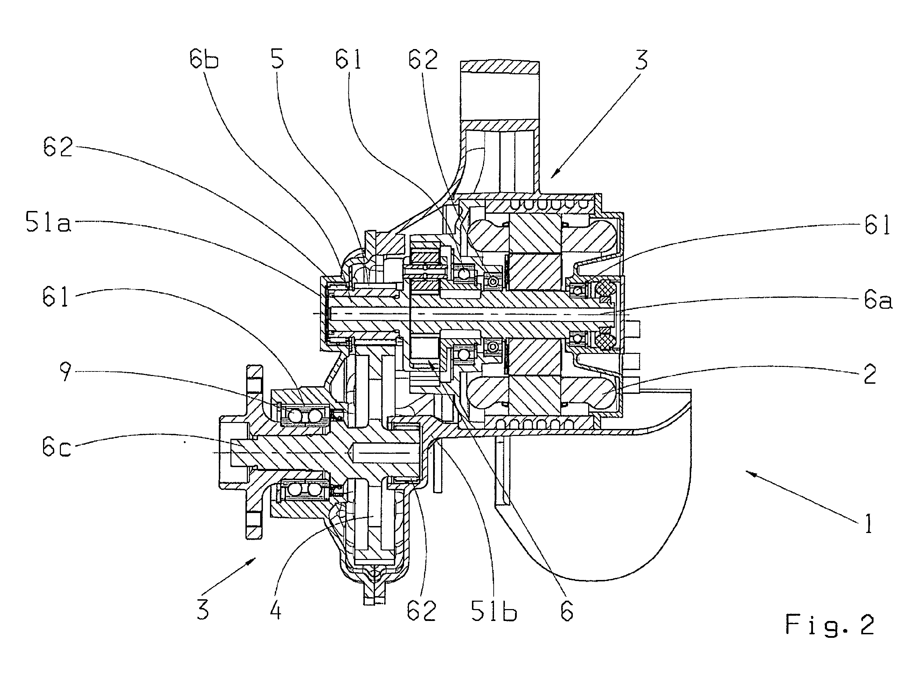

Figur 2 zeigt eine aufgeschnittene Darstellung einer radnahen Antriebseinheit gemäß einer zweiten Ausführungsform.

In Figur 2 ist im Wesentlichen eine radnahe Antriebseinheit 1 gemäß Figur 1 gezeigt. Im Unterschied zur Figur 1 sind nun Festlager 61 und Loslager 62 der Sonnenwelle 6a vertauscht, das heißt an der der Getriebeeinheit 3 abgewandten Seite des Elektromotors 2 ist die Sonnenwelle 6a mit einem Festlager 61 gelagert, wohingegen diese im Bereich zwischen dem Elektromotor 2 und dem Planetengetriebe 6 in einem Loslager 62 gelagert ist. Auf diese Weise ist es möglich, die axiale Erstreckung der Antriebsachsen, insbesondere der Sonnenwelle 6a und der Stegwelle 6b zu reduzieren, indem beispielsweise das Festlager 61 für die Stegwelle 6b unter einem Wickelkopf des Elektromotors 2 angeordnet werden kann.

Figur 3a-f zeigt verschiedene Positionen von Antriebswellenlagern und Abtriebswellenlagern in weiteren Ausführungsformen von radnahen Antriebseinheiten mit Lagerung über Rillenkugel- und Nadellager.

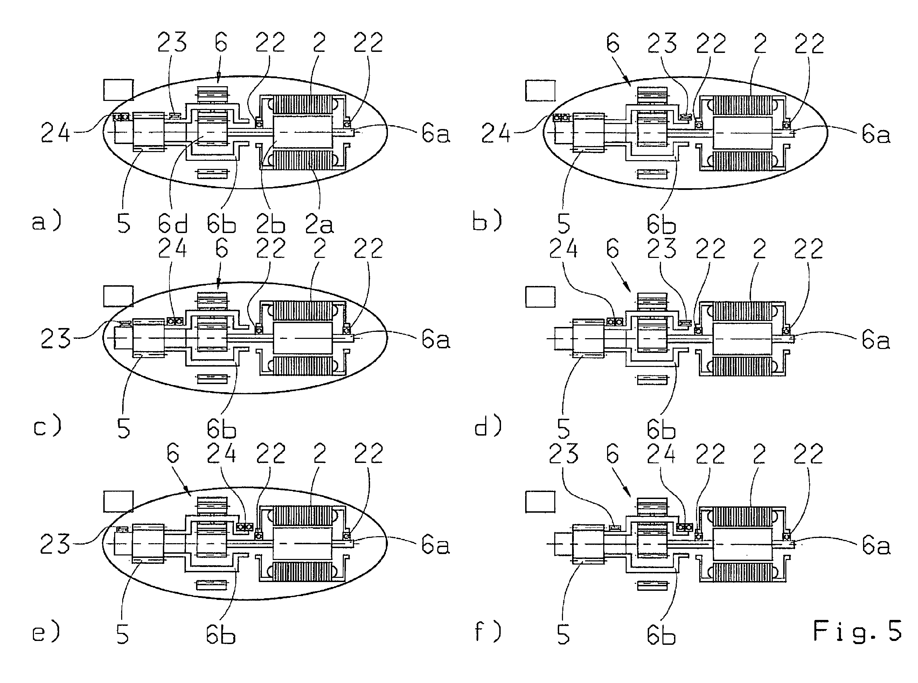

In den Figuren 3a-f wie auch in den weiteren Figuren 5a-f, 6a-c, 7a-c, 8a-c und 9a-i ist von links nach rechts der folgende Aufbau identisch: Auf der rechten Seite ist ein Elektromotor 2 angeordnet, der mit einer Sonnenwelle 6a als Antriebsachse verbunden ist. Die Sonnenwelle 6a weist auf der linken Seite ein Sonnenrad 6d auf, welches in ein Planetengetriebe 6 eingreift. Das Planetengetriebe 6 weist eine nach links abgehende Stegwelle 6b als Abtriebswelle auf. An der Abtriebswelle 6b ist ein Ritzel 5 angeordnet. Insgesamt ist somit von rechts nach links der Elektromotor 2, das Planetengetriebe 6 und auf der linken Seite das Ritzel 5 angeordnet, wobei der Elektromotor 2, umfassend einen Stator 2a und einen Rotor 2b, über die Sonnenwelle 6a mit dem Planetengetriebe 6 verbunden und das Planetengetriebe 6 über die Stegwelle 6b mit einem Ritzel 5 verbunden sind. Der Elektromotor 2 weist wiederum ein entsprechendes Gehäuse auf, auf dem sich die Sonnenwelle 6a auf der Seite des Planetengetriebes 6 einerseits und auf der dem Planetengetriebe 6 abgewandten Seite über Lager an dem Gehäuse des Elektromotors 2 abstützt. Insoweit ist unter "linkes Lager" und "rechtes Lager" des Elektromotors das dem Planetengetriebe 6 benachbarte Lager zu verstehen bzw. das auf der abgewandten Seite des Planetengetriebes 6 angeordnete Lager für die Sonnenwelle 6a am Elektromotor 2. Gleiches gilt entsprechend auch für die Lager, welche an der Stegwelle 6b angeordnet sind. Hierbei wird ebenfalls in Bezug auf das Planetengetriebe 6 mit dem Wort "links" Bezug genommen auf ein Lager, welches zwischen Planetengetriebe 6 und Ritzel 5 angeordnet ist und mit dem Wort "rechts" ein Lager, welches auf der Stegwelle 6b auf der dem Elektromotor 2 zugewandten Seite des Planetengetriebes 6 angeordnet ist.

Im Folgenden werden nun für die Figuren 3a-f der jeweilige Aufbau von rechts nach links mit den verschiedenen Lagern in unterschiedlichen Positionen beschrieben: Die Sonnenwelle 6a ist in Fig. 3a auf der linken und rechten Seite des Elektromotors 2 über Rillenkugellager 22 an dem Gehäuse des Elektromotors 2 gelagert. Die Stegwelle 6b ist auf der linken Seite des Planetengetriebes 6 über ein Nadellager 23 radial gelagert. Auf der linken Seite des Ritzels 5 ist wiederum ein Rillenkugellager 22 vorgesehen.

In Figur 3b ist anstelle des Nadellagers 23 auf der linken Seite des Planetengetriebes 6 dieses auf der rechten Seite des Planetengetriebes 6 an der Stegwelle 6b, also zwischen Planetengetriebe 6 und Elektromotor 2 angeordnet.

In Figur 3c sind das Rillenkugellager 22 und das Nadellager 23 aus der Figur 3a vertauscht angeordnet bei sonst insgesamt gleichem Aufbau.

In Figur 3d ist im Unterschied zu Figur 3b das Rillenkugellager 22 der Stegwelle 6b nicht auf der linken Seite des Ritzels 5, sondern auf der linken Seite des Planetengetriebes 6, also zwischen Ritzel 5 und Planetengetriebe 6 angeordnet.

Figur 3e zeigt die Positionen von Rillenkugellager 22 und Nagellager 23 an der die Stegwelle 6b vertauscht in Bezug auf den in Figur 3b gezeigten Aufbau.

In Figur 3f sind die Positionen von Rillenkugellager 22 und Nadellager 23 für die Stegwelle 6b vertauscht zum in Fig. 3d gezeigten Aufbau.

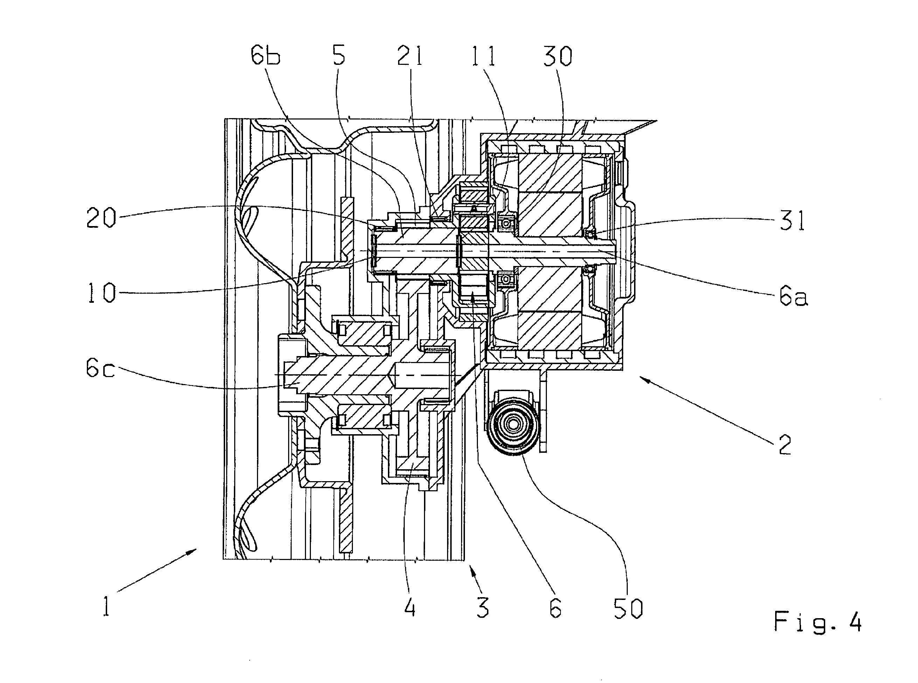

Figur 4 zeigt einen Querschnitt durch eine bekannte radnahe Antriebseinheit.

Figur 4 zeigt eine radnahe Antriebseinheit 1, welche einen Elektromotor 2 und eine Getriebeeinheit 3 umfasst. Der Elektromotor 2 weist eine Sonnenwelle 6a als Antriebsachse auf, die mit einem Planetengetriebe 6 verbunden ist. Das Planetengetriebe 6 weist als Abtriebswelle eine Stegwelle 6b auf, an der ein Ritzel 5 angeordnet ist. Das Ritzel 5 steht wiederum mit einem Stirnrad 4 und das Stirnrad 4 mit einer Radwelle 6c zum Antrieb eines Rades in Wirkverbindung. Die Sonnenwelle 6a ist dabei über Radiallager in X-Anordnung 30, 31 am Elektromotor 2 auf der dem Planetengetriebe 6 zugewandten und abgewandten Seite gelagert. Die Sonnenwelle 6a ist im Planetengetriebe 6 mit einem Axialnadellager 11 gelagert. Die Stegwelle 6b ist auf der dem Planetengetriebe 6 abgewandten Seite des Ritzels 5 mittels eines Axialnadellagers 10 gelagert. Ebenfalls auf der dem Planetengetriebe 6 abgewandten Seite des Ritzels 5 ist ein Radiallager 20 für die Stegwelle 6b angeordnet. Die Stegwelle 6b ist ebenfalls über ein Radiallager 21, welches zwischen Ritzel 5 und Planetengetriebe 6 an der Stegwelle 6b angeordnet ist, drehbar gelagert. Die in Figur 4 gezeigte radnahe Antriebseinheit 1 weist die in der Beschreibungseinleitung beschriebenen Nachteile auf.

Die Figur 5a-f zeigt verschiedene Positionen von Antriebswellenlagern und Abtriebswellenlagern in weiteren Ausführungsformen von radnahen Antriebseinheiten mit Lagerung über Schrägkugel- und Nadellager.

Für die Figur 5 wird wiederum Bezug genommen auf die allgemeinen Ausführungen zu der Anordnung von Elektromotor 2, Planetengetriebe 6 und Ritzel 5 zueinander wie in der Beschreibung zu den Figuren 3a-f weiter oben ausgeführt.

Die in den Figuren 5a-f gezeigten Anordnungen entsprechen dabei jeweils den Anordnungen der Figuren 3a-f, jedoch ist in den Figuren 5a-f anstelle des in den Figuren 3a-f jeweils vorgesehenen Rillenkugellagers 22 nun jeweils zwei gepaarte Schrägkugellager als Festlager 24 vorgesehen.

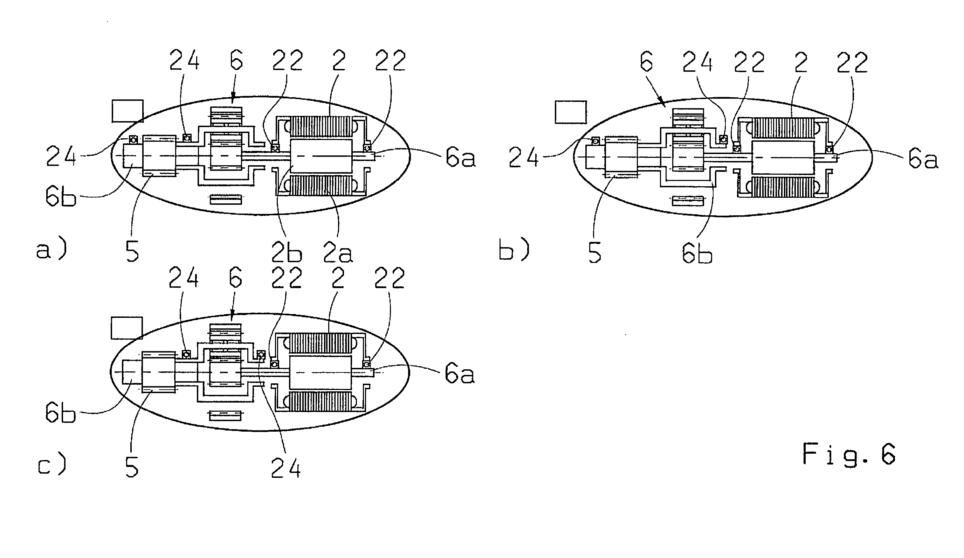

Die Figuren 6a-c zeigen verschiedene Positionen von Antriebswellenlagern und Abtriebswellenlagern in weiteren Ausführungsformen der radnahen Antriebseinheit mit angestellter Lagerung über Schrägkugellager.

Der in Figur 6a gezeigte Aufbau entspricht dem der Figur 3a, der der Figur 6b dem der Figur 3b und der der Figur 6c dem der Figur 3d. Im Unterschied zu den Figuren 3a, b, d ist anstelle des jeweiligen Rillenkugellagers 22 und des Nadellagers 23 jeweils ein einfaches Schrägkugellager 24 angeordnet. Die Schrägkugellager 24, insbesondere für die Stegwelle 6b, sind dabei als angestellte Lagerung zueinander ausgeführt, beispielsweise in X- oder O-Anordnung.

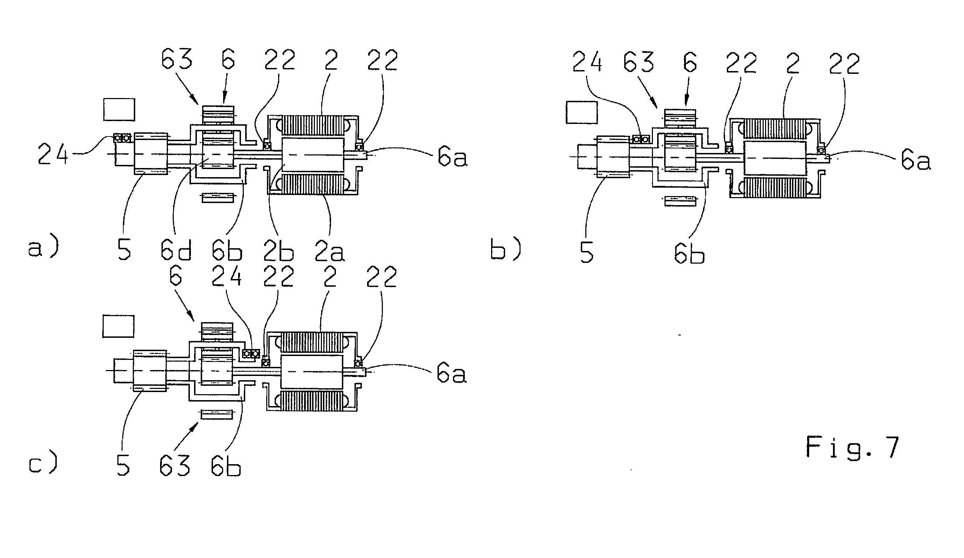

Die Figuren 7a-c zeigen verschiedene Positionen von Antriebswellenlagern und Abtriebswellenlagern in weiteren Ausführungsformen der radnahen Antriebseinheit gemäß der vorliegenden Erfindung mit fliegender Lagerung.

Die Anordnung der jeweiligen Lager in der radnahen Antriebseinheit gemäß den Figuren 7a-c entsprechen im Wesentlichen den Ausführungsformen der Figuren 5a, 5d, und 5f. Im Unterschied zu den Figuren 5a, d, f ist das jeweilige Nadellager 23 durch eine fliegende Lagerung 63 durch das Planetengetriebes 6 ersetzt.

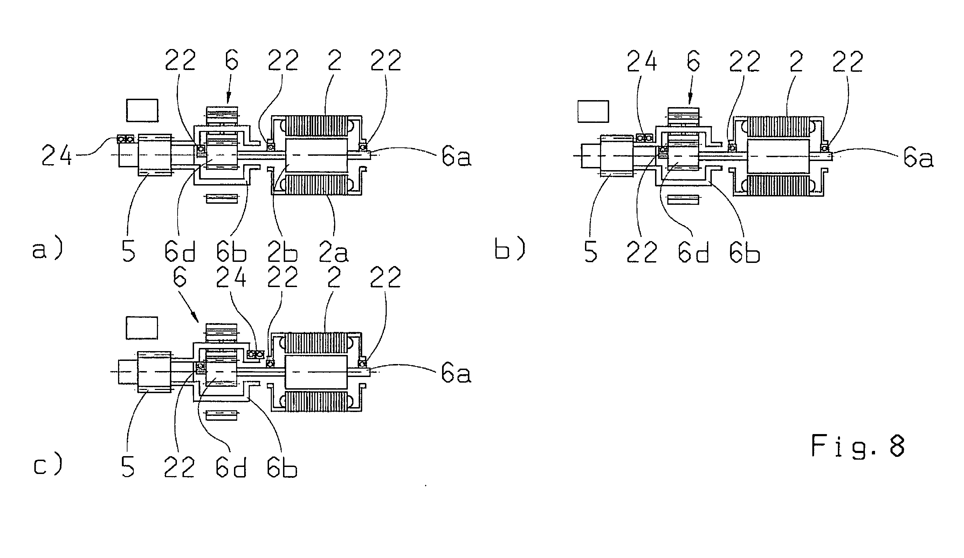

Die Figuren 8a-c zeigen verschiedene Positionen von Antriebswellenlagern und Abtriebswellenlagern in weiteren Ausführungsformen der radnahen Antriebseinheit mit Innen- und Außenlagerung.

Die Figuren 8a-c zeigen im Wesentlichen Ausführungsformen der Figuren 7a-c. Im Unterschied zu den Figuren 7a-c, bei denen eine fliegende Lagerung 63 durch das Planetengetriebe 6 bereitgestellt wird, stützt sich in den Figuren 8a-c die Sonnenwelle 6a im Planetengetriebe 6 über ein Rillenkugellager 22 an der Stegwelle 6b ab. Das Rillenkugellager 22 ist dabei jeweils auf der dem Elektromotor 2 abgewandten Seite des Planetengetriebes 6, also auf der linken Seite des Sonnenrades 6d der Sonnenwelle 6a angeordnet.

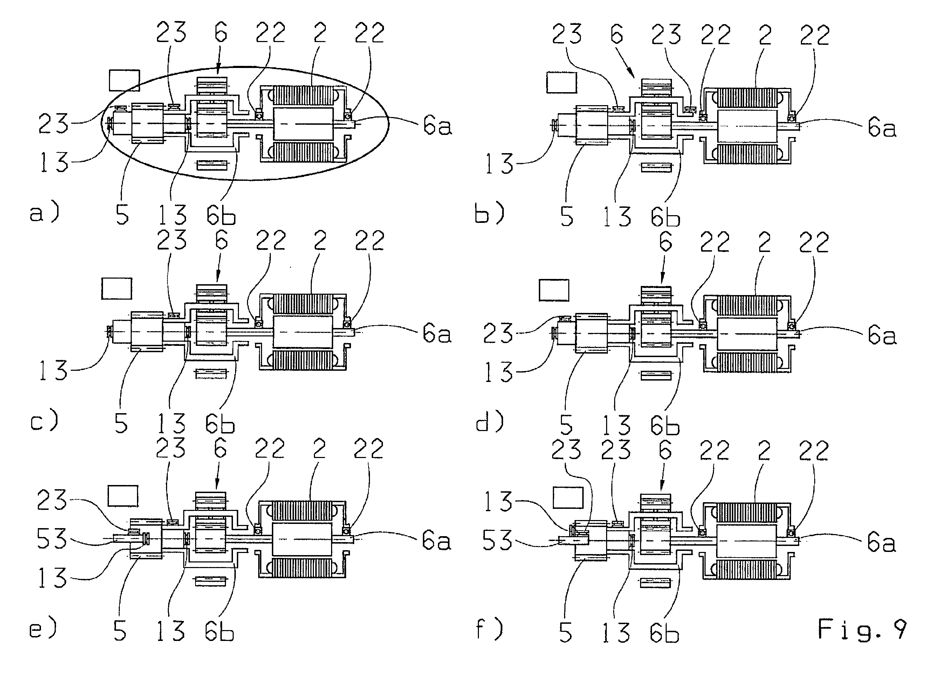

Die Figuren 9a-e zeigen verschiedene Positionen von Antriebswellenlagern und Abtriebswellenlagern in radnahen Antriebseinheiten mit Nadellagern.

In Figur 9a ist im Wesentlichen eine schematische Darstellung gemäß dem Aufbau der radnahen Antriebseinheit 1 der Figur 4 gezeigt mit zwei Axiallagern 13 jeweils auf der linken Seite der Stegwelle 6b und der linken Seite der Sonnenwelle 6a und mit zwei Radiallagern, wobei jeweils eines auf der Außenseite der Stegwelle 6b links des Ritzels 5 und auf der Außenseite der Stegwelle 6b zwischen Planetengetriebe 6 und Ritzel 5 angeordnet ist.

In Figur 9b ist im Wesentlichen der gleiche Aufbau der radnahen Antriebseinheit 1 gemäß Fig. 9a gezeigt. Im Unterschied zu Figur 9a ist das Nadellager 23 nicht auf der linken Seite des Ritzels 5 an der Stegwelle 6b, sondern an dieser zwischen Planetengetriebes 6 und Elektromotor 2 angeordnet.

Figur 9c zeigt im Wesentlichen denselben Aufbau der radnahen Antriebseinheit gemäß Figur 9a. Im Unterschied zur Figur 9a ist auf der linken Seite des Ritzels 5 kein Nadellager 23 als Radiallager auf der radialen Außenseite der Stegwelle 6b angeordnet, sondern das zweite Lager der Stegwelle bildet das Planetengetriebe.

Figur 9d zeigt im Wesentlichen denselben Aufbau der radnahen Antriebseinheit gemäß Figur 9a. Im Unterschied zur Figur 9a ist nun kein Nadellager 23 auf der radialen Außenseite der Stegwelle 6b zwischen Ritzel 5 und Planetengetriebe 6 angeordnet. Das zweite Lager der Stegwelle bildet das Planetengetriebe.

Figur 9e zeigt im Wesentlichen einen Aufbau einer radnahen Antriebseinheit gemäß Figur 9a. Im Unterschied zur Figur 9a, bei der ein Axialnadellager 13 und ein Nadellager 23 auf der radialen Außenseite der Stegwelle 6b links des Ritzels 5 angeordnet ist, ist die Stegwelle 6b gemäß Fig. 9e nun im Inneren über ein Axialnadellager 13, welches an einem Zapfen 53, der parallel zur Stegwelle 6b und in diese hineinragt, gelagert. Auf der radialen Außenseite des Zapfens 53 in der Stegwelle 6b ist ebenfalls das Nadellager 23 angeordnet, an dem die Stegwelle 6b drehbar gelagert ist.

Figur 9f zeigt im Wesentlichen die radnahe Antriebseinheit gemäß Figur 9e. Im Unterschied zur Figur 9e ist das axiale Nadellager 13 nicht im Inneren des Ritzels 5 bzw. der Stegwelle 6b angeordnet, sondern auf der radialen Außenseite des Zapfens 53 und auf der linken Stirnseite des Ritzels 5.

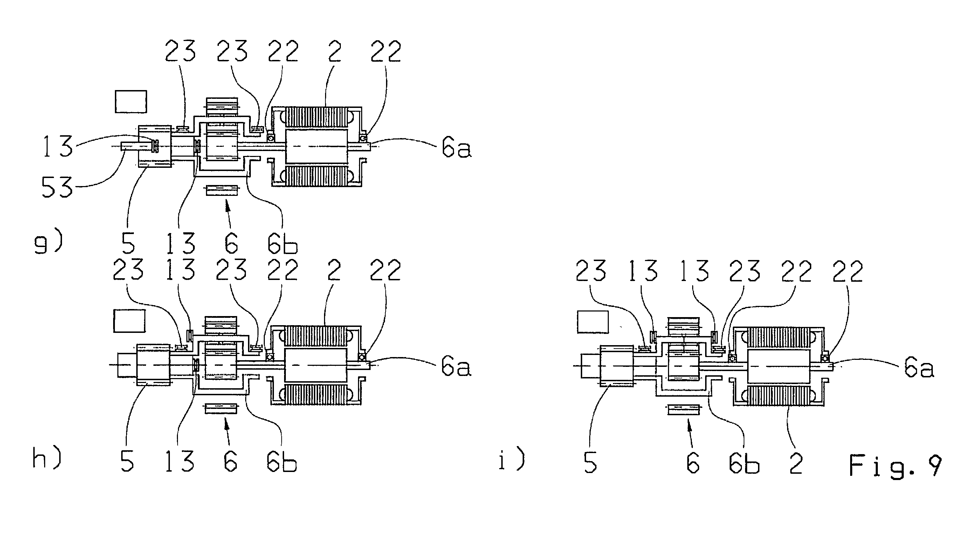

Figur 9g zeigt im Wesentlichen die radnahe Antriebseinheit gemäß Figur 9e. Im Unterschied zu Figur 9e ist das am Zapfen 53 radial angeordnete Nadellager 23 an der Stegwelle 6b im Bereich zwischen dem Planetengetriebe 6 und dem Elektromotor 2 angeordnet.

Figur 9h zeigt im Wesentlichen die radnahe Antriebseinheit gemäß Figur 9b. Im Unterschied zu Figur 9b ist anstelle der Anordnung des Nadellagers 13 auf der linken Seite des Ritzels 5 das Nadellager 13 zwischen Ritzel 5 und Planetengetriebe 6 an einem Steg der Stegwelle 6b senkrecht zur Stegwelle 6b angeordnet.

Figur 9i zeigt im Wesentlichen die radnahe Antriebseinheit gemäß Figur 9h. Im Unterschied zu Figur 9h ist an das innere Axialnadellager 13 für die Sonnenwelle 6a nun an der Stegwelle 6b des Planetengetriebes 6 im Bereich des Stegs der Stegwelle 6b senkrecht zur Stegwelle 6b zwischen Planetengetriebe 6 und Elektromotor 2 angeordnet.

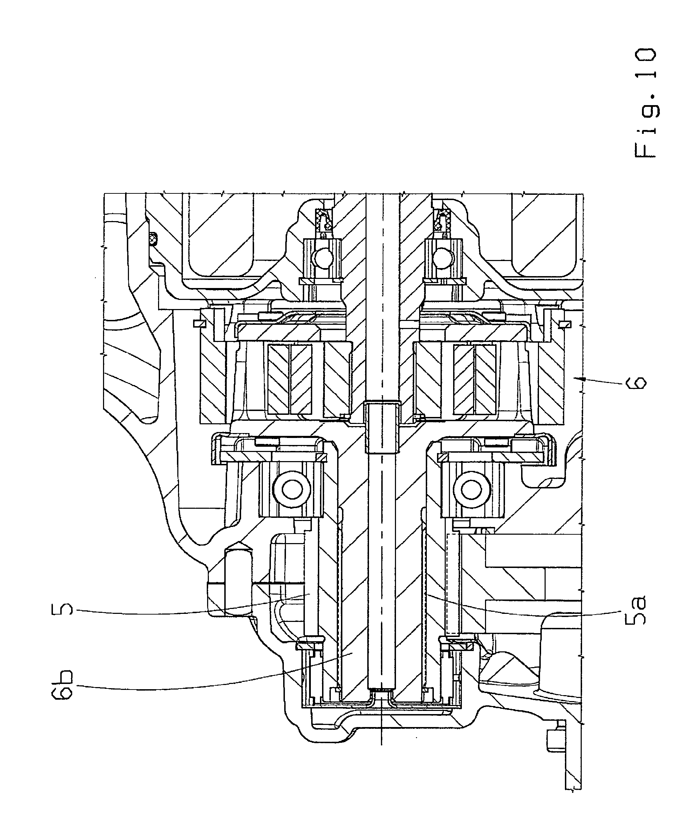

Figur 10 zeigt eine weitere Ausführungsform der radnahen Antriebseinheit gemäß der vorliegenden Erfindung.

In Figur 10 ist eine Detailansicht der Stegwelle 6b im Bereich von Planetengetriebe 6 und Ritzel 5 gezeigt. Das Ritzel 5 weist an seiner radialen Innenseite und die Stegwelle 6b auf ihrer radialen und zum Ritzel 5 benachbarten Außenseite eine Mitnahmeverzahnung 5a auf, so dass die Stegwelle 6b ein Drehmoment mittels der Mitnahmeverzahnung 5a auf das Ritzel 5 übertragen kann.

Zusammenfassend weist die Erfindung unter anderem den Vorteil auf, dass eine einfache und gleichzeitig steife Lagerung von Antriebswelle und Abtriebswelle einer radnahen Antriebseinheit zur Verfügung gestellt wird. Durch die erhöhte Steifigkeit können Zahnräder in der Getriebeeinheit exakter aufeinander abrollen und Geräusche werden dadurch vermieden. Gleichzeitig wird dadurch auch unnötige Reibung vermieden, was den Wirkungsgrad der radnahen Antriebseinheit verbessert. Ebenso ermöglicht die Erfindung, dass eine linke und rechte radnahe Antriebseinheit an einer Achse mit identischen Zahnrädern, insbesondere mit gleichen Schrägungswinkeln angeordnet werden können: Axial- und Radialkräfte werden über Festlager in das jeweilige Gehäuse der Getriebeeinheit oder des Elektromotors geleitet. Dies ermöglicht niedrigere Herstellungskosten für die radnahe Antriebseinheit, da höhere Stückzahlen für die Zahnräder und damit niedrigere Kosten entstehen.

### Bezugszeichen

- 1: radnahe Antriebseinheit
- 2: Elektromotor
- 2a: Stator
- 2b: Rotor
- 3: Getriebeeinheit
- 4: Stirnrad
- 5: Ritzel
- 5a: Mitnahmeverzahnung
- 6: Planetengetriebe
- 6a: Sonnenwelle
- 6b: Stegwelle
- 6c: Radwelle
- 6d: Sonnenrad
- 9: Radlager
- 10: Axialnadellager
- 11: Axialnadellager
- 12: Rillenkugellager
- 13: Nadellager
- 20: Radiallager
- 21: Radiallager
- 22: Rillenkugellager
- 23: Nadellager
- 24: Schrägkugellager
- 30: Radiallager X-Anordnung
- 31: Radiallager X-Anordnung
- 50: Federteller
- 51a: radseitiges Gehäuse
- 51b: Längslenkergehäuse
- 52: Längslenker
- 61: Festlager
- 62: Loslager
- 63: fliegende Lagerung

## Patentansprüche

1. Radnahe Antriebseinheit (1) für ein Kraftfahrzeug, insbesondere ein Elektrofahrzeug, umfassend eine elektrische Maschine (2) mit einer Antriebswelle (6a) und eine Getriebeeinheit (3) mit zumindest einer ersten Getriebekomponente (6) mit einer Abtriebswelle (6b), wobei die Getriebeeinheit (3) mit der Antriebswelle (6a) zum Übertragen von Drehmomenten zusammenwirkt, wobei die Antriebswelle (6a) mittels zwei Antriebswellenlagern (22, 23, 24) und die Abtriebswelle (6b) mittels zumindest eines Abtriebwellenlagers (22, 23, 24) gelagert ist, wobei zumindest eines der Antriebswellenlager (22, 23, 24) und Abtriebswellenlager (22, 23, 24) als Festlager (61) und zumindest ein weiteres der Antriebswellenlager (22, 23, 24) und Abtriebswellenlager (22, 23, 24) als Loslager (62) ausgebildet ist, wobei die Antriebswellenlager (22, 23, 24) und die Abtriebswellenlager (22, 23, 24) als Radiallager (20, 21) ausgebildet sind, und **dadurch gekennzeichnet, dass** zwei Abtriebswellenlager (22, 23, 24) angeordnet sind und die Abtriebswelle (6b) fliegend gelagert ist.

2. Radnahe Antriebseinheit (1) gemäß Anspruch 1, **dadurch gekennzeichnet, dass** die Antriebswellenlager (22, 23) und/oder Abtriebswellenlager (22, 23) als Wälzlager ausgebildet sind, wobei zumindest eines der Loslager (62) (61) als Nadellager (23), das zumindest eine andere Loslager (62) oder Festlager (61) als Rillenkugellager (22) oder Schrägkugellager (24) ausgebildet ist.

3. Radnahe Antriebseinheit (1) gemäß zumindest einem der Ansprüche 1-2, **dadurch gekennzeichnet, dass** an der Abtriebswelle (6b) eine zweite Getriebekomponente (5), insbesondere ein Ritzel angeordnet ist, wobei das zumindest eine Abtriebswellenlager (22, 23, 24) zwischen erster und zweiter Getriebekomponente (5, 6) angeordnet ist.

4. Radnahe Antriebseinheit (1) gemäß zumindest einem der Ansprüche 1-3, **dadurch gekennzeichnet, dass** das zumindest eine Abtriebswellenlager (22, 23, 24) auf der der ersten Getriebekomponente (6) abgewandten Seite der zweiten Getriebekomponente (5) angeordnet ist.

5. Radnahe Antriebseinheit (1) gemäß zumindest einem der Ansprüche 1-4, **dadurch gekennzeichnet, dass** eines der Abtriebswellenlager (22, 23, 24) auf der der elektrischen Maschine (2) zugewandten Seite der ersten Getriebekomponente (6) angeordnet ist.

6. Radnahe Antriebseinheit gemäß zumindest einem der Ansprüche 1-5, **dadurch gekennzeichnet, dass** die erste Getriebekomponente (6) als Planetengetriebe ausgebildet ist und die zweite Getriebekomponente (5) als Ritzel ausgebildet und an der Abtriebswelle (6b) des Planetengetriebes (6) angeordnet ist.

7. Radnahe Antriebseinheit gemäß Anspruch 6, **dadurch gekennzeichnet, dass** Abtriebswelle (6b) und Ritzel (5) einstückig hergestellt sind.

8. Radnahe Antriebseinheit gemäß Anspruch 6, **dadurch gekennzeichnet, dass** Abtriebswelle (6b) und Ritzel (5) über eine Mitnahmeverzahnung (5a) zur Übertragung von Drehmomenten verbunden sind.

9. Radnahe Antriebseinheit (1) gemäß zumindest einem der Ansprüche 1-8, **dadurch gekennzeichnet, dass** ein Antriebswellenlager (22, 23, 24) auf der Innenseite der Abtriebswelle (6b) angeordnet ist.

10. Fahrzeugachse mit zumindest einer radnahen Antriebseinheit (1) gemäß zumindest einem der Ansprüche 1-9 .

11. Verwendung einer radnahen Antriebseinheit (1) gemäß zumindest einem der Ansprüche 1-9 zum Antrieb eines Rades eines Elektrofahrzeugs.

## Claims

1. Drive unit (1), positioned close to a wheel, for a motor vehicle, in particular an electric vehicle, comprising an electric machine (2) with a drive shaft (6a) and comprising a transmission unit (3) with at least one first transmission component (6) with an output shaft (6b), wherein the transmission unit (3) interacts with the drive shaft (6a) in order to transmit torques, wherein the drive shaft (6a) is mounted by means of two drive shaft bearings (22, 23, 24) and the output shaft (6b) is mounted by means of at least one output shaft bearing (22, 23, 24), wherein at least one of the drive shaft bearings (22, 23, 24) and output shaft bearings (22, 23, 24) are in the form of fixed bearings (61) and at least one other of the drive shaft bearings (22, 23, 24) and output shaft bearings (22, 23, 24) are in the form of floating bearings (62), wherein the drive shaft bearings (22, 23, 24) and the output shaft bearings (22, 23, 24) are in the form of radial bearings (20, 21), and **characterized in that** two output shaft bearings (22, 23, 24) are provided, and the output shaft (6b) is mounted in an overhung configuration.

2. Drive unit (1), positioned close to a wheel, according to Claim 1, **characterized in that** the drive shaft bearings (22, 23) and/or output shaft bearings (22, 23) are in the form of rolling bearings, wherein at least one of the floating bearings (62) (61) is in the form of a needle-roller bearing (23), and the at least one other floating bearing (62) or fixed bearing (61) is in the form of a deep-groove ball bearing (22) or angular-contact ball bearing (24).

3. Drive unit (1), positioned close to a wheel, according to at least one of Claims 1 and 2, **characterized in that**, on the output shaft (6b), there is arranged a second transmission component (5), in particular a pinion, wherein the at least one output shaft bearing (22, 23, 24) is arranged between first transmission component and second transmission component (5, 6).

4. Drive unit (1), positioned close to a wheel, according to at least one of Claims 1 to 3, **characterized in that** the at least one output shaft bearing (22, 23, 24) is arranged on that side of the second transmission component (5) which is averted from the first transmission component (6).

5. Drive unit (1), positioned close to a wheel, according to at least one of Claims 1 to 4, **characterized in that** one of the output shaft bearings (22, 23, 24) is arranged on that side of the first transmission component (6) which faces toward the electric machine (2).

6. Drive unit, positioned close to a wheel, according to at least one of Claims 1 to 5, **characterized in that** the first transmission component (6) is in the form of a planetary gear set, and the second transmission component (5) is in the form of a pinion and is arranged on the output shaft (6b) of the planetary gear set (6).

7. Drive unit, positioned close to a wheel, according to Claim 6, **characterized in that** the output shaft (6b) and pinion (5) are produced in one piece.

8. Drive unit, positioned close to a wheel, according to Claim 6, **characterized in that** the output shaft (6b) and pinion (5) are connected by way of a driver toothing (5a) for transmitting torques.

9. Drive unit (1), positioned close to a wheel, according to at least one of Claims 1 to 8, **characterized in that** a drive shaft bearing (22, 23, 24) is arranged on the inner side of the output shaft (6b).

10. Vehicle axle having at least one drive unit (1), positioned close to a wheel, according to at least one of Claims 1-9.

11. Use of a drive unit (1), positioned close to a wheel, according to at least one of Claims 1 to 9 for driving a wheel of an electric vehicle.

## Revendications

1. Ensemble d'entraînement adjacent à une roue (1) pour un véhicule à moteur, en particulier un véhicule électrique, comprenant une machine électrique (2) avec un arbre d'entraînement (6a) et une unité de transmission (3) avec au moins un premier composant de transmission (6) avec un arbre de commande (6b), dans lequel l'unité de transmission (3) coopère avec l'arbre d'entraînement (6a) pour la transmission de couples de rotation, dans lequel l'arbre d'entraînement (6a) est supporté au moyen de deux paliers d'arbre d'entraînement (22, 23, 24) et l'arbre de commande (6b) est supporté au moyen d'au moins un palier d'arbre de commande (22, 23, 24), dans lequel au moins un des paliers d'arbre d'entraînement (22, 23, 24) et des paliers d'arbre de commande (22, 23, 24) est un palier fixe (61) et au moins un autre des paliers d'arbre d'entraînement (22, 23, 24) et des paliers d'arbre de commande (22, 23, 24) est un palier libre (62), dans lequel les paliers d'arbre d'entraînement (22, 23, 24) et les paliers d'arbre de commande (22, 23, 24) sont des paliers radiaux (20, 21), **caractérisé en ce que** deux paliers d'arbre de commande (22, 23, 24) sont disposés et l'arbre de commande (6b) est supporté de façon mobile.

2. Ensemble d'entraînement (1) adjacent à une roue selon la revendication 1, **caractérisé en ce que** les paliers d'arbre d'entraînement (22, 23) et/ou les paliers d'arbre de commande (22, 23) sont des paliers à roulement, dans lequel au moins un des paliers libres (62) (61) est un roulement à aiguilles (23), ledit au moins un autre palier libre (62) ou palier fixe (61) est un roulement à billes rainuré (22) ou un roulement à billes à portée oblique (24).

3. Ensemble d'entraînement (1) adjacent à une roue selon au moins une des revendications 1 à 2, **caractérisé en ce qu'**un deuxième composant de transmission (5), en particulier un pignon, est disposé sur l'arbre de commande (6b), dans lequel ledit au moins un palier d'arbre de commande (22, 23, 24) est disposé entre le premier et le deuxième composants de transmission (5, 6).

4. Ensemble d'entraînement (1) adjacent à une roue selon au moins une des revendications 1 à 3, **caractérisé en ce que** ledit au moins un palier d'arbre de commande (22, 23, 24) est disposé sur le côté du deuxième composant de transmission (5) situé à l'opposé du premier composant de transmission (6).

5. Ensemble d'entraînement (1) adjacent à une roue selon au moins une des revendications 1 à 4, **caractérisé en ce qu'**un des paliers d'arbre de commande (22, 23, 24) est disposé sur le côté du premier composant de transmission (6) tourné vers la machine électrique (2).

6. Ensemble d'entraînement (1) adjacent à une roue selon au moins une des revendications 1 à 5, **caractérisé en ce que** le premier composant de transmission (6) est un engrenage planétaire et le deuxième composant de transmission (5) est un pignon et est disposé sur l'arbre de commande (6b) de l'engrenage planétaire (6).

7. Ensemble d'entraînement (1) adjacent à une roue selon la revendication 6, **caractérisé en ce que** l'arbre de commande (6b) et le pignon (5) sont réalisés en une seule pièce.

8. Ensemble d'entraînement (1) adjacent à une roue selon la revendication 6, **caractérisé en ce que** l'arbre de commande (6b) et le pignon (5) sont reliés par une denture d'entraînement (5a) pour la transmission de couples de rotation.

9. Ensemble d'entraînement (1) adjacent à une roue selon au moins une des revendications 1 à 8, **caractérisé en ce qu'**un palier d'arbre d'entraînement (22, 23, 24) est disposé sur le côté intérieur de l'arbre de commande (6b).

10. Essieu de véhicule avec au moins un ensemble d'entraînement (1) adjacent à une roue selon au moins une des revendications 1 à 9.

11. Utilisation d'un ensemble d'entraînement (1) adjacent à une roue selon au moins une des revendications 1 à 9 pour l'entraînement d'une roue d'un véhicule électrique.
